(19) Europäisches Patentamt / European Patent Office / Office européen des brevets

(11) **EP 3 584 092 B1**

(12) **EUROPEAN PATENT SPECIFICATION**

(45) Date of publication and mention
of the grant of the patent:
**24.02.2021 Bulletin 2021/08**

(51) Int Cl.:
*B60C 1/00* *(2006.01)*          *C08L 21/00* *(2006.01)*
*C08L 47/00* *(2006.01)*          *C08L 57/02* *(2006.01)*
*C08K 3/36* *(2006.01)*          *C08K 5/548* *(2006.01)*

(21) Application number: **19172698.3**

(22) Date of filing: **06.05.2019**

(54) **RUBBER COMPOSITION AND TIRE**

KAUTSCHUKZUSAMMENSETZUNG UND REIFEN

COMPOSITION DE CAOUTCHOUC ET PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.06.2018 JP 2018117171**

(43) Date of publication of application:
**25.12.2019 Bulletin 2019/52**

(73) Proprietor: **SUMITOMO RUBBER INDUSTRIES,
LTD.
Kobe-shi,
Hyogo 651-0072 (JP)**

(72) Inventor: **WATANABE, Kenya
Chuo-ku, Kobe-shi,, Hyogo 651-0072 (JP)**

(74) Representative: **TBK
Bavariaring 4-6
80336 München (DE)**

(56) References cited:
**EP-A1- 3 064 543          EP-A1- 3 064 544
WO-A1-2017/199688**

**Description**

TECHNICAL FIELD

The present invention relates to a rubber composition and a tire having a tire member composed of the rubber composition.

BACKGROUND OF THE INVENTION

Examples of important characteristics demanded for a tire include wet grip performance and abrasion resistance. Further, recently enhancement of fuel efficiency by improvement of a rolling resistance of a tie has been demanded from the viewpoint of energy saving. A small hysteresis loss is required for enhancement of fuel efficiency, and a high wet skid resistance is required for enhancement of wet grip performance. However, a small hysteresis loss and a high wet skid resistance are contrary to each other, and it is difficult to improve fuel efficiency and wet grip performance in a good balance.

A method of adding carbon black to a rubber composition is known for improvement of abrasion resistance. However, a balance between fuel efficiency and wet grip performance tends to be decreased. Further, a butadiene rubber being advantageous for improving abrasion resistance is small in a hysteresis loss and has good fuel efficiency, but is disadvantageous for wet grip performance.

JP 2013-053296 A discloses a rubber composition for a tire, in which fuel efficiency, wet grip performance and abrasion resistance are improved by blending a specific liquid resin and silica. However, there is a room for improvement from the viewpoint that silica has strong self-agglomeration property and its dispersion is difficult.

EP 3 064 543 A1 discloses a winter tire having both improved grip performance on ice and abrasion resistance and further having good mechanical strength. The winter tire includes a tread formed from a rubber composition containing: an oil-extended BR having a cis content of 95 mol% or more, a vinyl content of 1 mol% or less, and a MW of 530, O00 or more; an isoprene-based diene rubber; silica; and carbon black, the oil-extended BR being synthesized using a rare earth catalyst, the composition containing, per 100% by mass of total rubber solids, 8-80% by mass of the BR component contained in the oil-extended BR and 13-80% by mass of isoprene-based diene rubber, the composition containing, per 100 parts by mass of total rubber solids, 15-125 parts by mass of silica and 3-70 parts by mass of carbon black, provided that the combined amount of silica and carbon black is 45-130 parts by mass.

SUMMARY OF THE INVENTION

An object of the present invention is to provide a rubber composition having improved fuel efficiency, wet grip performance and abrasion resistance in good balance, and a tire having a tire member composed of the rubber composition.

As a result of intensive studies, the inventor of the present invention has found that the above-mentioned object can be achieved by blending a terpene resin, a liquid rubber and/or a liquid resin and silica to a diene rubber and adjusting a crosslinking density of a rubber composition (a volume change rate after swelling in toluene) to be within a predetermined range, and have completed the present invention.

Namely, the present invention relates to:

[1] a rubber composition comprising: 5 to 20 parts by mass of a terpene resin having a weight-average molecular weight of 500 to 4,000, 5 to 30 parts by mass of a liquid rubber and/or a liquid resin having a weight-average molecular weight of 100 to 4,000, and 95 to 160 parts by mass of silica, based on 100 parts by mass of a diene rubber, wherein a volume change rate of the rubber composition measured in accordance with JIS K 6258 after having been dipped in toluene of 40°C for 24 hours is 220 to 270%,

[2] the rubber composition of the above [1], comprising two or more kinds of silane coupling agents having different sulfur contents,

[3] the rubber composition of the above [1] or [2], comprising a silane coupling agent having a thioester group, and

[4] a tire having a tire member composed of the rubber composition of any one of the above [1] to [3].

According to the present invention, a rubber composition having improved fuel efficiency, wet grip performance and abrasion resistance in good balance, and a tire having a tire member composed of the rubber composition are provided.

DETAILED DESCRIPTION

The rubber composition according to one embodiment of the present invention is characterized by comprising a diene rubber, a terpene resin, a liquid rubber and/or a liquid resin and silica and having a crosslinking density (a volume change rate after swelling in toluene) within a predetermined range. Herein when a numerical range is shown using "to", it is understood that figures at both ends thereof are included within the numerical range.

In the rubber composition according to one embodiment of the present invention, it is considered that by compounding a specific terpene resin having a high compatibility with a diene rubber and finely dispersing the terpene resin in the rubber composition, a high performance is exhibited under a stimulus response of a high frequency band such as a wet grip region, while a hysteresis loss is inhibited under a stimulus response of a low frequency band as in rolling of a tire. Further, it is considered that by finely dispersing the terpene resin in the rubber composition, lowering of abrasion resistance is inhibited.

Furthermore, by compounding the terpene resin and the liquid rubber and/or the liquid resin simultaneously in good balance, the above-mentioned dispersion of the resin is controlled, lowering of fuel efficiency and abrasion resistance is inhibited and a high wet grip performance is exhibited.

Further, by controlling a crosslinking density, an energy loss due to a molecular motion of a rubber can be inhibited and fuel efficiency can be secured while inhibiting a stress concentration in a material and securing abrasion resistance.

As mentioned above, according to the present invention, fuel efficiency, wet grip performance and abrasion resistance can be improved at a high level in good balance.

<Crosslinking density>

In one embodiment of the present invention, a volume change rate after swelling of a rubber composition in toluene is used as a measure for reflecting a crosslinking density of a rubber composition. Herein, the volume change rate after swelling of a rubber composition in toluene can be obtained by determining a volume change rate (%) after swelling each of vulcanized test rubber compositions in toluene of 40°C for 24 hours according to JIS K 6258:2016 "Rubber, vulcanized or thermoplastic-Determination of the effect of liquids".

The volume change rate after swelling of the rubber composition according to one embodiment of the present invention in toluene is 220% or more, preferably 225% or more, more preferably 230% or more, further preferably 235% or more. When the volume change rate is less than 220%, abrasion resistance tends to decrease. On the other hand, the volume change rate is 270% or less, preferably 265% or less, more preferably 260% or less, further preferably 255% or less. When the volume change rate exceeds 270%, fuel efficiency tends to decrease.

<Rubber component>

Examples of the rubber components to be used in one embodiment of the present invention include diene rubbers such as natural rubber (NR), isoprene rubber (IR), butadiene rubber (BR), styrene-butadiene rubber (SBR), styrene-isoprene-butadiene rubber (SIBR), ethylene propylene diene rubber (EPDM), chloroprene rubber (CR) and acrylonitrile butadiene rubber (NBR) and the like. Among these, SBR and BR are preferable since grip performance and abrasion resistance are obtained in good balance. These rubber components may be used alone or may be used in combination of two or more thereof.

(SBR)

SBR is not limited particularly, and examples thereof include an un-modified emulsion-polymerized styrene-butadiene rubber (E-SBR) and an un-modified solution-polymerized styrene-butadiene rubber (S-SBR) and modified SBRs thereof such as a modified emulsion-polymerized styrene-butadiene rubber (modified E-SBR) and a modified solution-polymerized styrene-butadiene rubber (modified S-SBR). Further, there are an oil-extended type SBR having flexibility adjusted by adding an extender oil thereto and a non-extending type SBR in which an extender oil is not added, and either of them can be used. These SBRs may be used alone or may be used in combination of two or more thereof.

Examples of S-SBR usable in one embodiment of the present invention include S-SBRs manufactured by JSR Corporation, Sumitomo Chemical Co., Ltd., Ube Industries, Ltd., Asahi Kasei Corporation, ZEON CORPORATION, etc.

A styrene content of the SBR is preferably not less than 20% by mass, more preferably not less than 25% by mass, from the viewpoint of grip performance and abrasion resistance. Further, the styrene content of the SBR is preferably not more than 60% by mass, more preferably not more than 50% by mass, from the viewpoint of temperature dependency of grip performance and abrasion resistance. It is noted that the styrene content is calculated in accordance with $^1$H-NMR measurement.

A vinyl content of the SBR is preferably not less than 15%, more preferably not less than 18%, from the viewpoint of grip performance. On the other hand, from the viewpoint of temperature dependency of grip performance, the vinyl content of the SBR is preferably not more than 65%, preferably not more than 63%. It is noted that the vinyl content of the SBR (an amount of 1,2-bond butadiene unit) can be determined by an infrared absorption spectrum analysis method.

A weight-average molecular weight (Mw) of the SBR is preferably not less than 100,000, more preferably not less than 150,000, further preferably not less than 250,000 from the viewpoint of grip performance. On the other hand, the weight-average molecular weight is preferably not more than 2,000,000, more preferably not more than 1,500,000, further preferably not more than 1,200,000 from the viewpoint of crosslinking uniformity.

A content of the SBR in the diene rubber is preferably not less than 50% by mass, more preferably not less than 60% by mass, further preferably not less than 70% by mass from the viewpoint of grip performance. On the other hand, the content of the SBR in the diene rubber is preferably not more than 95% by mass, more preferably not more than 90% by mass, further preferably not more than 85% by mass from the viewpoint of abrasion resistance and fuel efficiency. It is noted that when an oil-extended type SBR is used as the SBR, the content of SBR in the rubber component is a content of SBR itself as a solid content contained in the oil-extended type SBR.

(BR)

BR is not limited particularly, and examples of usable BRs include BRs usually used in a rubber industry, for example, a BR having a content of cis-1,4 bond of less than 50% (low cis BR), a BR having a content of cis-1,4 bond of not less than 90% (high cis BR), a rare-earth butadiene rubber (rare-earth BR) synthesized using a rare-earth element catalyst, a BR comprising syndiotactic polybutadiene crystals (SPB-containing BR), a modified BR (high cis modified BR, low cis modified BR) and the like. Among these BRs, a high cis BR is preferable since abrasion resistance is good.

Examples of the high-cis BRs include BR1220 available from ZEON CORPORATION, BR130B, BR150B and BR150L available from Ube Industries, Ltd., R730 available from JSR Corporation and the like. When the rubber component comprises a high cis BR, low temperature characteristics and abrasion resistance can be enhanced. Examples of the rare-earth BRs include BUNA-CB25 manufactured by Lanxess K.K. and the like.

An example of the SPB-containing BR is not one in which 1,2-syndiotactic polybutadiene crystals are simply dispersed in the BR, but one in which 1,2-syndiotactic polybutadiene crystals are chemically bonded with the BR and dispersed therein. Examples of such SPB-containing BR include VCR-303, VCR-412 and VCR-617 manufactured by Ube Industries, Ltd. and the like.

Examples of a modified BR include a modified BR (tin modified BR) obtained by performing polymerization of 1,3-butadiene with a lithium initiator and then adding a tin compound, and further having the molecular terminals bonded with a tin-carbon bond, a butadiene rubber (modified BR for silica) having an alkoxysilane condensate compound in an active terminal thereof and the like. Examples of such modified BRs include BR1250H (tin-modified) manufactured by ZEON CORPORATION, S-modified polymer (modified for silica) manufactured by Sumitomo Chemical Industry Company Limited and the like.

The cis 1,4-bond content (cis content) in the BR is preferably 90% by mass or more, more preferably 93% by mass or more, still more preferably 95% by mass or more, from the viewpoint of durability and abrasion resistance. It can be considered that since in the case of a larger cis content, a polymer chain is arranged regularly, an interaction between the polymers becomes strong, a rubber strength is enhanced and abrasion resistance when running on a rough road is increased.

A weight-average molecular weight (Mw) of the BR is preferably not less than 400,000, more preferably not less than 450,000, further preferably not less than 500,000 from the viewpoint of abrasion resistance and grip performance. On the other hand, the weight-average molecular weight is preferably not more than 2,000,000, more preferably not more than 1,000,000 from the viewpoint of crosslinking uniformity.

A content of the BR in 100% by mass of the diene rubber is preferably not less than 5% by mass, more preferably not less than 10% by mass, further preferably not less than 15% by mass from the viewpoint of abrasion resistance. On the other hand, the content of the BR is preferably not more than 50% by mass, more preferably not more than 40% by mass, further preferably not more than 30% by mass from the viewpoint of wet grip performance.

(Terpene resin)

Examples of the terpene resin include polyterpene resins comprising at least one selected from starting materials of terpene such as α-pinene, β-pinene, limonene and dipentene; an aromatic modified terpene resin prepared using a terpene compound and an aromatic compound as starting materials; terpene resins (terpene resins not hydrogenated) such as a terpene-phenol resin prepared using a terpene compound and a phenol compound as starting materials; and terpene resins obtained by subjecting these terpene resins to hydrogenation (hydrogenated terpene resins). Here, examples of the aromatic compound to be used as a starting material for the aromatic modified terpene resin include styrene, α-methylstyrene, vinyl toluene, divinyl toluene and the like. Further, examples of the phenol compound to be used as a starting material for the terpene-phenol resin include phenol, bisphenol A, cresol, xylenol and the like.

A softening point of the terpene resin is preferably not lower than 100°C, more preferably not lower than 105°C, further preferably not lower than 110°C from the viewpoint of wet grip performance. On the other hand, the softening point of the terpene resin is preferably not higher than 150°C, more preferably not higher than 145°C, further preferably not higher than 140°C from the viewpoint of fuel efficiency and abrasion resistance.

A weight-average molecular weight (Mw) of the terpene resin is preferably not less than 500, more preferably not less than 600 from the viewpoint of abrasion resistance. On the other hand, the weight-average molecular weight is preferably not more than 4,000, more preferably not more than 3,500, further preferably not more than 3,000 from the viewpoint of processability.

A content of the terpene resin is not less than 5 parts by mass, preferably not less than 8 parts by mass, more preferably not less than 10 parts by mass based on 100 parts by mass of the rubber component. When the content of the terpene resin is less than 5 parts by mass, there is a tendency that an enough wet grip performance cannot be obtained. On the other hand, the content of the terpene resin is not more than 20 parts by mass, preferably not more than 18 parts by mass, more preferably not more than 16 parts by mass. When the content of the terpene resin exceeds 20 parts by mass, fuel efficiency tends to be lowered and there is a tendency that generation of an un-dissolved resin occurs during a kneading step, which causes inferior dispersion and deterioration of abrasion resistance.

(Liquid rubber and liquid resin)

Examples of the liquid rubber include a liquid butadiene rubber (liquid BR), a liquid styrene-butadiene rubber (liquid SBR), a liquid isoprene rubber (liquid IR) and the like. Examples of the liquid resin include a liquid coumarone-indene resin, a liquid C5-C9 petroleum resin and the like. These liquid rubbers and liquid resins may be used alone or may be used in combination of two or more thereof. Among these, the liquid SBR or the liquid C5-C9 petroleum resin are preferable. RICON (registered trade mark) series resins manufactured by CRAY VALLEYS can be used suitably as the liquid resin and the liquid rubber.

A weight-average molecular weight (Mw) of the liquid rubber and the liquid resin is preferably not less than 100, more preferably not less than 200 from the viewpoint of abrasion resistance. On the other hand, the weight-average molecular weight is preferably not more than 4,000, more preferably not more than 3,500, further preferably not more than 3,000 from the viewpoint of processability.

A content of the liquid rubber and/or the liquid resin is not less than 5 parts by mass, preferably not less than 8 parts by mass, more preferably not less than 10 parts by mass based on 100 parts by mass of the rubber component. When the content of the liquid rubber and/or the liquid resin is less than 5 parts by mass, there is a tendency that a sufficient wet grip performance cannot be obtained. On the other hand, the content of the liquid rubber and/or the liquid resin is not more than 30 parts by mass, preferably not more than 28 parts by mass, more preferably not more than 25 parts by mass. When the content of the liquid rubber and/or the liquid resin exceeds 30 parts by mass, fuel efficiency and abrasion resistance tend to be lowered.

A ratio of a content of the terpene resin to a content of the liquid rubber and/or the liquid resin (a content of the terpene resin / a content of the liquid rubber and/or the liquid resin) is preferably not less than 0.5, more preferably not less than 0.7 from the viewpoint of wet grip performance. On the other hand, the ratio of a content of the terpene resin to a content of the liquid rubber and/or the liquid resin is preferably not more than 5, more preferably not more than 4 from the viewpoint of fuel efficiency and abrasion resistance.

It should be noted that the weight-average molecular weight described herein is a value determined by standard polystyrene conversion by gel permeation chromatography (GPC) (GPC-8000 series, manufactured by Tosoh Corporation, detector: differential refractometer).

<Filler>

A filler used in one embodiment of the present invention is featured by comprising silica as an essential component. Silica is preferably used in combination with a silane coupling agent.

(Silica)

Silica is not limited particularly, and those commonly used in rubber industry such as silica prepared by a dry method (anhydrous silicic acid) and silica prepared by a wet method (hydrated silicic acid) can be used. Among these, anhydrous silicic acid is preferable since many silanol groups are contained. The silica may be used alone or may be used in combination of two or more thereof.

The BET specific surface area of silica is preferably 80 $m^2/g$ or more, more preferably 100 $m^2/g$ or more from the viewpoint of durability and elongation at break. On the other hand, the BET specific surface area of silica is preferably 250 m$^2$/g or less, more preferably 220 m$^2$/g or less from the viewpoint of fuel efficiency and processability. It should be noted that the BET specific surface area of silica as used herein is a value determined by measurement using the BET method in accordance with ASTM D3037-93.

The content of silica is not less than 95 parts by mass, preferably not less than 100 parts by mass based on 100 parts by mass of the rubber component. When the content of silica is less than 95 parts by mass, there is a tendency that an effect of wet grip performance cannot be obtained sufficiently. Furthermore, the content of silica is not more than 160 parts by mass, preferably not more than 150 parts by mass, more preferably not more than 140 parts by mass based on 100 parts by mass of the rubber component. When the content of silica exceeds 160 parts by mass, there is a tendency that a Mooney viscosity increases greatly and mold processability is lowered.

(Silane coupling agent)

Silica is preferably used in combination with a silane coupling agent. The silane coupling agent is not limited particularly and any silane coupling agent that has been hitherto used in combination with silica in rubber industry is usable. Examples thereof include: silane coupling agents having a sulfide group such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl) tetrasulfide, bis(2-trimethoxysilylethyl)tetrasulfide, bis(4-trimethoxysilylbutyl)tetrasulfide, bis(3-triethoxysilylpropyl)trisulfide, bis(2-triethoxysilylethyl)trisulfide, bis(4-triethoxysilylbutyl)trisulfide, bis(3-trimethoxysilylpropyl)trisulfide, bis(2-trimethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 2-trimethoxysilylethyl-N,N-dimethylthiocarbamoyl tetrasulfide, 3-trimethoxysilylpropylbenzothiazolyl tetrasulfide, 3-triethoxysilylpropylbenzothiazole tetrasulfide and 3-trimethoxysilylpropyl methacrylate monosulfide; silane coupling agents having a mercapto group such as 3-mercaptopropyltrimethoxysilane, 3-mercaptopropyltriethoxysilane, 2-mercaptoethyltrimethoxysilane and 2-mercaptoethyltriethoxysilane; silane coupling agents having a thioester group such as 3-octanoylthio-1-propyltrimethoxysilane, 3-hexanoylthio-1-propyltriethoxysilane and 3-octanoylthio-1-propyltriethoxysilane; silane coupling agents having a vinyl group such as vinyltriethoxysilane; silane coupling agents having an amino group such as 3-aminopropyltriethoxysilane; silane coupling agents having a glycidoxy group such as γ-glycidoxypropyltriethoxysilane; silane coupling agents having a nitro group such as 3-nitropropyltrimethoxysilane; silane coupling agents having a chloro group such as 3-chloropropyltrimethoxysilane; and the like. These silane coupling agents may be used alone or may be used in combination of two or more thereof. Among these, silane coupling agents having a thioester group is preferable since reaction thereof with a diene rubber is less up to a high temperature and a strong coupling of a diene rubber with a silane coupling agent and silica during kneading can be inhibited, thereby enabling silica to be dispersed appropriately, and 3-octanoylthio-1-propyltriethoxysilane is more preferable.

Further, in one embodiment of the present invention, combination use of two or more silane coupling agents having different sulfur contents is more preferable. By combination use of two or more silane coupling agents having different sulfur contents, even in the case where a reaction temperature of silica with a silane coupling agent is high, there is a tendency that a strong coupling of a diene rubber with a silane coupling agent and silica during kneading is inhibited and satisfactory dispersion of silica is obtained, thereby enabling deterioration of abrasion resistance to be inhibited. Further even in the case where a reaction temperature of silica with a silane coupling agent is low, there is a tendency that silica is dispersed sufficiently during kneading and deterioration of fuel efficiency and abrasion resistance can be inhibited. Such combination of two or more silane coupling agents is not limited particularly, and example of such combination include combination of a silane coupling agent having a sulfide group and a silane coupling agent having a mercapto group or a thioester group, and combination of bis(3-triethoxysilylpropyl)tetrasulfide and 3-octanoylthio-1-propyltriethoxysilane is preferable.

In one embodiment of the present invention, a sulfur content of a silane coupling agent means a ratio of a sulfur content per unit mass of a silane coupling agent. For example, in the case of combination use of two or more silane coupling agents having different sulfur contents, a sulfur content of a silane coupling agent having a high sulfur content is preferably 0.35% by mass or more, more preferably 0.4% by mass or more. On the other hand, a sulfur content of a silane coupling agent having a high sulfur content is preferably 0.8% by mass or less, more preferably 0.7% by mass or less. A sulfur content of a silane coupling agent having a low sulfur content is preferably 0.05% by mass or more, more preferably 0.1% by mass or more. On the other hand, a sulfur content of a silane coupling agent having a low sulfur content is preferably 0.35% by mass or less, more preferably 0.3% by mass or less. However, since the sulfur contents of a silane coupling agent having a high sulfur content and a silane coupling agent having a low sulfur content differ from each other, the sulfur contents thereof are not the same, and even if the sulfur contents thereof are within a preferable range, both sulfur contents are not 0.35% by mass at the same time. When the sulfur content of each silane coupling agent is within a preferable range, a balance of fuel efficiency and abrasion resistance becomes satisfactory.

When the rubber composition comprises the silane coupling agents, the total content of silane coupling agents is preferably not less than 1 part by mass, more preferably not less than 3 parts by mass, further preferably not less than 5 parts by mass based on 100 parts by mass of silica. Further, the total content of the silane coupling agents is preferably not more than 20 parts by mass, more preferably not more than 15 parts by mass, further preferably not more than 10 parts by mass. When the total content of silane coupling agents is within the above-mentioned range, more satisfactory processability, rubber strength, fuel efficiency and abrasion resistance tend to be obtained.

In the silane coupling agents, a silane coupling agent having a thioester group is contained in an amount of preferably 1% by mass or more, more preferably 10% by mass or more, further preferably 20% by mass or more. Further, a ratio of a silane coupling agent having a high sulfur content to a silane coupling agent having a low sulfur content is not limited particularly, and, for example, can be 1: 99 to 99:1, 10:90 to 90:10, 20:80 to 80:20.

(Other fillers)

Fillers other than silica may be used as a filler. Such a filler is not limited particularly, and, for example, fillers commonly used in a rubber industry such as carbon black, aluminum hydroxide, alumina (aluminum oxide), calcium carbonate, talc and clay can be used. These fillers can be used alone or in combination of two or more thereof. When using one other than silica as a filler, carbon black is preferable from the viewpoint of a rubber strength. Namely, fillers comprising silica and carbon black is preferable, and fillers consisting of silica and carbon black is more preferable.

Carbon black commonly used in a rubber industry can be used appropriately. Examples of carbon black include furnace black, acetylene black, thermal black, channel black, graphite, and the like, and specifically N110, N115, N120, N125, N134, N135, N219, N220, N231, N234, N293, N299, N326, N330, N339, N343, N347, N351, N356, N358, N375, N539, N550, N582, N630, N642, N650, N660, N683, N754, N762, N765, N772, N774, N787, N907, N908, N990, N991 and the like can be used suitably. Besides those mentioned above, carbon black synthesized by Sumitomo Rubber Industries, Ltd. can also be used suitably. These carbon blacks may be used alone or may be used in combination of two or more thereof.

A nitrogen adsorption specific surface area ($N_2SA$) of carbon black is preferably 110 $m^2/g$ or more, more preferably 115 $m^2/g$ or more, further preferably 120 $m^2/g$ or more. When the $N_2SA$ of carbon black is 110 $m^2/g$ or more, carbon black is dispersed in the neighborhood of a boundary of each phase of the BR and the SBR, thereby increasing a contact area between the SBR and the carbon black. Thus, since bonding between the phases of the BR and the SBR is increased, a reinforcing effect on the rubber composition is enhanced more and a rubber composition being improved in abrasion resistance can be obtained. Further, an upper limit of the $N_2SA$ of carbon black is not limited particularly, and is preferably 180 $m^2/g$ or less, more preferably 160 $m^2/g$ or less, further preferably 150 $m^2/g$ or less. Herein, the $N_2SA$ of carbon black is a value measured according to JIS K 6217-2 "Carbon black for rubber industry - Fundamental characteristics - Part 2: Determination of specific surface area - Nitrogen adsorption methods - Single-point procedures".

When the rubber composition comprises a carbon black, the content thereof is preferably not less than 1 part by mass, more preferably not less than 3 parts by mass, further preferably not less than 5 parts by mass based on 100 parts by mass of the rubber component from the viewpoint of abrasion resistance. Further, an upper limit of the content of carbon black is not limited particularly, and is preferably not more than 100 parts by mass, more preferably not more than 80 parts by mass, further preferably not more than 60 parts by mass from the viewpoint of fuel efficiency and processability.

A content of the whole fillers is preferably not less than 95 parts by mass, more preferably not less than 100 parts by mass, further preferably not less than 105 parts by mass based on 100 parts by mass of the rubber component from the viewpoint of reinforceability and wet grip performance. On the other hand, the content is preferably not more than 160 parts by mass, more preferably not more than 150 parts by mass, further preferably not more than 140 parts by mass from the viewpoint of dispersibility of silica and processability.

A content of silica in the fillers is preferably 50% by mass or more, more preferably 70% by mass or more, further preferably 80% by mass or more from the viewpoint of fuel efficiency and wet grip performance.

<Other components>

In the rubber composition according to one embodiment of the present invention, in addition to the above-mentioned rubber component, terpene resin, liquid rubber, liquid resin and fillers, compounding agents and additives which have been used in a rubber industry, for example, a softening agent other than the above-mentioned terpene resin, liquid rubber and liquid resin, a wax, an antioxidant, a stearic acid, a zinc oxide, a vulcanizing agent such as sulfur, vulcanization accelerators and the like can be blended appropriately according to necessity.

A softening agent other than the above-mentioned terpene resin, liquid rubber and liquid resin is not limited particularly as far as it is one commonly used in a rubber industry. Examples of the softening agent include liquid polymers other than a terpene resin and a liquid rubber, mineral oil-containing oil such as aromatic oil, process oil and paraffin oil and the like.

When the rubber composition comprises an oil, the content thereof is preferably not more than 100 parts by mass, more preferably not more than 80 parts by mass based on 100 parts by mass of the rubber component from the viewpoint of preventing decrease in abrasion resistance. On the other hand, the content of the oil is preferably not less than 5 parts by mass, more preferably not less than 10 parts by mass from the viewpoint of processability.

When the rubber composition comprises a wax, the content thereof is preferably not less than 0.5 part by mass, more preferably not less than 1 part by mass based on 100 parts by mass of the rubber component from the viewpoint of inhibition of deterioration of the rubber. On the other hand, the content of wax is preferably not more than 10 parts by mass, more preferably not more than 5 parts by mass from the viewpoint of prevention of whitening of a tire due to blooming.

When the rubber composition comprises an antioxidant, the content thereof is preferably not less than 0.5 part by mass, more preferably not less than 1 part by mass based on 100 parts by mass of the rubber component from the viewpoint of inhibition of deterioration of the rubber. On the other hand, the content of antioxidant is preferably not more than 10 parts by mass, more preferably not more than 5 parts by mass from the viewpoint of prevention of whitening of a tire due to blooming.

When the rubber composition comprises a stearic acid, the content thereof is preferably not less than 0.5 part by mass, more preferably not less than 1 part by mass based on 100 parts by mass of the rubber component from the viewpoint of increase in a vulcanization rate of the rubber and increase in productivity of a tire. On the other hand, the content of stearic acid is preferably not more than 8 parts by mass, more preferably not more than 5 parts by mass from the viewpoint of preventing decrease in abrasion resistance.

When the rubber composition comprises a zinc oxide, the content thereof is preferably not less than 0.5 part by mass, more preferably not less than 1 part by mass based on 100 parts by mass of the rubber component from the viewpoint of increase in a vulcanization rate of the rubber and increase in productivity of a tire. On the other hand, the content of zinc oxide is preferably not more than 8 parts by mass, more preferably not more than 5 parts by mass from the viewpoint of preventing decrease in abrasion resistance.

When sulfur is contained as the vulcanizing agent, the content thereof is preferably 0.5 part by mass or more, more preferably 1 part by mass or more based on 100 parts by mass of the rubber component from the viewpoint of securing sufficient vulcanization reaction and obtaining a good grip performance and abrasion resistance. On the other hand, the content of sulfur is preferably 3 parts by mass or less based on 100 parts by mass of the rubber component from the viewpoint of inhibiting decrease in grip performance and abrasion resistance due to blooming.

Examples of the vulcanization accelerator include sulfenamide-, thiazole-, thiuram-, thiourea-, guanidine-, dithiocarbamate-, aldehyde amine- or aldehyde ammonia-, imidazoline- and xanthate-based vulcanization accelerators. These vulcanization accelerators may be used alone or may be used in combination of two or more thereof. Among these, sulfenamide-based vulcanization accelerators are preferred from the viewpoint of good vulcanization characteristics and satisfactory fuel efficiency resulting from physical properties of the vulcanized rubber. Examples of the sulfenamide-based vulcanization accelerators include N-tert-butyl-2-benzothiazolylsulfenamide (TBBS), N-cyclohexyl-2-benzothiazolylsulfenamide (CZ), N,N-dicyclohexyl-2-benzothiazolylsulfenamide (DZ) and the like. Among these, N-cyclohexyl-2-benzothiazolylsulfenamide is preferred.

When the rubber composition comprises a vulcanization accelerator, the content thereof is preferably 0.1 part by mass or more, more preferably 0.5 part by mass or more based on 100 parts by mass of the rubber component from the viewpoint of acceleration of vulcanization. On the other hand, the content of the vulcanization accelerator is preferably 5 parts by mass or less, more preferably 4 parts by mass or less based on 100 parts by mass of the rubber component from the viewpoint of processability.

The rubber composition according to one embodiment of the present disclosure can be prepared by known methods. For example, the rubber composition can be prepared by kneading the above-mentioned components with a rubber kneader such as an open roll, a Banbury mixer, a closed kneader or the like and then vulcanizing a resultant kneaded product.

An another embodiment of the present invention relates to tire having a tire member composed of the above-mentioned rubber composition. Examples of the tire member composed of the above-mentioned rubber composition include a tread, an under tread, a carcass, a side wall, a bead and the like. Among these, a tread is preferred since wet grip performance, abrasion resistance and fuel efficiency are good.

A tire according to one embodiment of the present invention can be produced by a usual method using the above-mentioned rubber composition. Namely, the unvulcanized rubber composition obtained by kneading the above-mentioned components is extrusion-processed into a shape of a tire member such as a tread, and the obtained extruded member is laminated with other tire members to form an unvulcanized tire on a tire molding machine by a usual method. The tire can be produced by heating and pressurizing above-mentioned unvulcanized tire in a vulcanizer.

Example

The present invention will be described based on Examples, but the present invention is not limited thereto only.

A variety of chemicals used in Examples and Comparative Examples will be explained below.

SBR: SLR6430 available from TRINSEO S.A. (S-SBR, styrene content: 40% by mass, a vinyl content: 20%, Mw: 1,000,000)

BR: BR150L (high-cis BR, cis-1,4 bond content: 98% by mass, Mw: 600,000) manufactured by Ube Industries, Ltd.

Terpene resin: SYLVATRAXX 4150 (softening point: 115°C, Mw: 2,500, not hydrogenated) manufactured by Arizona Chemical

Liquid resin: RICON340 (Liquid C5-C9 resin, Mw: 2,400) manufactured by CRAY VALLEY

Carbon black: SHOBLACK N220 ($N_2SA$: 125 $m^2/g$) manufactured by Cabot Japan K. K.

Silica: ULTRASIL VN3 (BET: 175 $m^2/g$) manufactured by Evonik Degussa

Silane coupling agent 1: NXT available from Momentive Performance Materials Inc. (3-octanoylthio-1-propyltriethoxysilane) (sulfur content: 0.3% by mass)

Silane coupling agent 2: Si69 (bis(3-triethoxysilylpropyl) tetrasulfide) manufactured by Evonik Degussa (sulfur content: 0.7% by mass)

Oil: Mineral Oil PW-380 manufactured by Idemitsu Kosan Co., Ltd.

Antioxidant: NOCRAC 6C (N-(1,3-dimethylbutyl)-N'-phenyl-p-phenylenediamine) manufactured by OUCHI SHINKO CHEMICAL INDUSTRIAL CO., LTD.

Stearic acid: Stearic acid manufactured by NOF Corporation

Zinc oxide: Zinc Oxide No. 1 manufactured by Mitsui Mining & Smelting Co., Ltd.

Wax: SUNNOC Wax N manufactured by OUCHI SHINKO CHEMICAL INDUSTRIAL CO., LTD.

Sulfur: Powdered sulfur manufactured by Tsurumi Chemical Industry Co., Ltd.

Vulcanization accelerator 1: Nocceler CZ (N-cyclohexyl-2-benzothiazolylsulfeneamide) manufactured by OUCHI SHINKO CHEMICAL INDUSTRIAL CO., LTD.

Vulcanization accelerator 2: Nocceler D (N,N'-diphenyl guanidine) manufactured by OUCHI SHINKO CHEMICAL INDUSTRIAL CO., LTD.

Examples and Comparative Examples

According to the compounding formulations shown in Table 1, compounding components other than sulfur and vulcanization accelerators were filled in a 1.7 L Banbury mixer manufactured by Kobe Steel, Ltd. at a filling rate of 58% and kneaded for three minutes at 80 rpm up to a temperature of 140°C to obtain a kneaded product. Then, sulfur and vulcanization accelerators were added to the obtained kneaded product, and kneaded for five minutes at 80°C using an open roll to obtain unvulcanized rubber compositions of Examples and Comparative Examples. The obtained unvulcanized rubber compositions were press-vulcanized at 170°C for 12 minutes to manufacture test rubber compositions.

The obtained unvulcanized rubber compositions and test rubber compositions were subjected to the following evaluation. Evaluation results are shown in Table 1.

<Mooney viscosity index>

A Mooney viscosity ($ML_{1+4}$) of each of the unvulcanized rubber compositions was determined at 130°C according to JIS K 6300-1 "Unvulcanized rubber - Physical properties - Part. 1: Method for measuring viscosity and scorch time using a Mooney viscometer". The result is shown by an index, assuming an inverse number of a Mooney viscosity of Comparative Example 1 to be 100. The larger the index is, the lower the Mooney viscosity is, and the better the processability is.

$$\text{(Mooney viscosity index)} =$$

$$(ML_{1+4} \text{ of Comparative Example 1}) \ / \ (ML_{1+4} \text{ of each formulation}) \times 100$$

<Volume change rate>

A volume change rate (%) of each of the vulcanized test rubber compositions was determined according to JIS K 6258:2016 "Rubber, vulcanized or thermoplastic-Determination of the effect of liquids" after dipping in toluene of 40°C for 24 hours. The smaller the volume change rate is, the higher the crosslinking density is.

<Index of fuel efficiency>

A loss tangent (tanδ) of each test rubber composition was measured at a dynamic strain amplitude of 1%, a frequency of 10 Hz and a temperature of 50°C using a spectrometer manufactured by Ueshima Seisakusho Co., Ltd. The result is shown by an index, assuming an inverse number of tanδ of Comparative Example 1 to be 100. The larger the index is, the smaller a rolling resistance is and the better the fuel efficiency is.

$$(\text{Index of fuel efficiency}) =$$

$$(\text{tan}\delta \text{ of Comparative Example 1}) / (\text{tan}\delta \text{ of each formulation}) \times 100$$

<Index of wet grip performance>

A wet grip performance of each test rubber composition was evaluated using a flat belt friction tester (FR 5010 type) manufactured by Ueshima Seisakusho Co., Ltd. A cylindrical rubber test piece of each test rubber composition of 20 mm wide × 100 mm diameter was used as a sample, and a slip rate of the sample on a road surface was changed from 0% to 70% under conditions of a speed of 20 km/hour, a load of 4 kgf and a road surface temperature of 20°C, and a maximum friction coefficient detected was read. The results of measurement are indicated with an index obtained by the following equation. The larger the index is, the better the wet grip performance is.

$$(\text{Index of wet grip performance}) =$$

$$(\text{Maximum value of friction coefficient of each formulation}) / (\text{Maximum}$$

$$\text{value of friction coefficient of Comparative Example 1}) \times 100$$

<Abrasion resistance index>

An abrasion loss of each test rubber composition was measured with a Lambourn abrasion testing machine under the conditions of a room temperature, a load of 1.0 kgf, and a slip rate of 30%. The result is shown by an index, assuming an inverse number of an abrasion loss of Comparative Example 1 to be 100. The larger the index is, the better the abrasion resistance is.

$$(\text{Abrasion resistance index}) =$$

$$(\text{Abrasion loss of Comparative Example 1}) / (\text{Abrasion loss of each}$$

$$\text{formulation}) \times 100$$

Table 1

| | Example | | | |
|---|---|---|---|---|
| | 1 | 2 | 3 | 4 |
| Compounding amount (part by mass) | | | | |
| SBR | 80 | 80 | 80 | 80 |
| BR | 20 | 20 | 20 | 20 |
| Terpene resin | 10 | 20 | 10 | 10 |
| Liquid resin | 10 | 10 | 20 | 10 |
| Silica | 100 | 100 | 100 | 100 |
| Silane coupling agent 1 | 3.0 | 3.0 | 3.0 | 3.0 |
| Silane coupling agent 2 | 3.0 | 3.0 | 3.0 | 3.0 |

(continued)

| | Example | | | |
|---|---|---|---|---|
| | 1 | 2 | 3 | 4 |
| Compounding amount (part by mass) | | | | |
| Carbon black | 5.0 | 5.0 | 5.0 | 5.0 |
| Oil | 20 | 20 | 20 | 20 |
| Antioxidant | 1.5 | 1.5 | 1.5 | 1.5 |
| Stearic acid | 2.0 | 2.0 | 2.0 | 2.0 |
| Zinc oxide | 2.5 | 2.5 | 2.5 | 2.5 |
| Wax | 1.0 | 1.0 | 1.0 | 1.0 |
| Sulfur | 2.0 | 2.0 | 2.0 | 2.5 |
| Vulcanization accelerator 1 | 1.8 | 1.8 | 1.8 | 1.8 |
| Vulcanization accelerator 2 | 1.2 | 1.2 | 1.2 | 1.2 |
| Evaluation | | | | |
| Mooney viscosity | 108 | 119 | 122 | 110 |
| Volume change rate | 240 | 240 | 250 | 230 |
| Fuel efficiency | 110 | 102 | 107 | 115 |
| Wet grip performance | 121 | 134 | 127 | 118 |
| Abrasion resistance | 118 | 107 | 106 | 110 |

| | Comparative Example | | | | | | | | |
|---|---|---|---|---|---|---|---|---|---|
| | 1 | 2 | 3 | 4 | 5 | 6 | 7 | 8 | 9 |
| Compounding amount (part by mass) | | | | | | | | | |
| SBR | 70 | 70 | 70 | 70 | 70 | 70 | 70 | 70 | 70 |
| BR | 30 | 30 | 30 | 30 | 30 | 30 | 30 | 30 | 30 |
| Terpene resin | - | 10 | - | 50 | 10 | 10 | 10 | 10 | 10 |
| Liquid resin | - | - | 10 | 10 | 50 | 10 | 10 | 10 | 10 |
| Silica | 100 | 100 | 100 | 100 | 100 | 75 | 180 | 100 | 100 |
| Silane coupling agent 1 | 3.0 | 3.0 | 3.0 | 3.0 | 3.0 | 3.0 | 3.0 | 3.0 | 3.0 |
| Silane coupling agent 2 | 3.0 | 3.0 | 3.0 | 3.0 | 3.0 | 3.0 | 3.0 | 3.0 | 3.0 |
| Carbon black | 5.0 | 5.0 | 5.0 | 5.0 | 5.0 | 5.0 | 5.0 | 5.0 | 5.0 |
| Oil | 30 | 25 | 25 | - | 10 | 10 | 50 | 20 | 20 |
| Antioxidant | 1.5 | 1.5 | 1.5 | 1.5 | 1.5 | 1.5 | 1.5 | 1.5 | 1.5 |
| Stearic acid | 2.0 | 2.0 | 2.0 | 2.0 | 2.0 | 2.0 | 2.0 | 2.0 | 2.0 |
| Zinc oxide | 2.5 | 2.5 | 2.5 | 2.5 | 2.5 | 2.5 | 2.5 | 2.5 | 2.5 |
| Wax | 1.0 | 1.0 | 1.0 | 1.0 | 1.0 | 1.0 | 1.0 | 1.0 | 1.0 |
| Sulfur | 2.0 | 2.0 | 2.0 | 2.0 | 2.0 | 2.0 | 2.0 | 5.0 | 0.5 |
| Vulcanization accelerator 1 | 1.8 | 1.8 | 1.8 | 1.8 | 1.8 | 1.8 | 1.8 | 1.8 | 1.8 |
| Vulcanization accelerator 2 | 1.2 | 1.2 | 1.2 | 1.2 | 1.2 | 1.2 | 1.2 | 1.2 | 1.2 |
| Evaluation | | | | | | | | | |
| Mooney viscosity | 100 | 98 | 99 | 131 | 122 | 110 | 87 | 101 | 100 |
| Volume change rate | 240 | 240 | 250 | 255 | 270 | 240 | 255 | 200 | 300 |
| Fuel efficiency | 100 | 94 | 61 | 68 | 86 | 94 | 72 | 118 | 88 |
| Wet grip performance | 100 | 111 | 155 | 141 | 133 | 89 | 122 | 92 | 103 |
| Abrasion resistance | 100 | 95 | 72 | 77 | 81 | 103 | 83 | 77 | 109 |

From the results shown in Table 1, it is seen that the rubber composition of the present invention comprising a diene rubber, a terpene resin, a liquid rubber and/or a liquid resin and silica and having a crosslinking density (a volume change rate after swelling in toluene) within a predetermined range is improved in fuel efficiency, wet grip performance and abrasion resistance in good balance.

An object of the present invention is to provide a rubber composition having improved fuel efficiency, wet grip performance and abrasion resistance in good balance, and a tire having a tire member composed of the rubber composition. The rubber composition is a rubber composition comprising: 5 to 20 parts by mass of a terpene resin having a weight-average molecular weight of 500 to 4,000, 5 to 30 parts by mass of a liquid rubber and/or a liquid resin having a weight-average molecular weight of 100 to 4,000, and 95 to 160 parts by mass of silica, based on 100 parts by mass of a diene rubber, wherein a volume change rate of the rubber composition measured in accordance with JIS K 6258 after having been dipped in toluene of 40°C for 24 hours is of 220 to 270%.

## Claims

1.   A rubber composition comprising:

   5 to 20 parts by mass of a terpene resin having a weight-average molecular weight of 500 to 4,000,
   5 to 30 parts by mass of a liquid rubber and/or a liquid resin having a weight-average molecular weight of 100 to 4,000, and
   95 to 160 parts by mass of silica,
   based on 100 parts by mass of a diene rubber,
   wherein a volume change rate of the rubber composition measured in accordance with JIS K 6258 after having been dipped in toluene of 40°C for 24 hours is of 220 to 270%.

2.   The rubber composition of claim 1, comprising two or more kinds of silane coupling agents having different sulfur contents.

3.   The rubber composition of claim 1 or 2, comprising a silane coupling agent having a thioester group.

4.   A tire having a tire member composed of the rubber composition of any one of claims 1 to 3.

## Patentansprüche

1.   Kautschukzusammensetzung umfassend:

   5 bis 20 Gewichtsteile an einem Terpenharz mit einem gewichtsgemittelten Molekulargewicht von 500 bis 4000,
   5 bis 30 Gewichtsteile an einem flüssigen Kautschuk und/oder einem flüssigen Harz mit einem gewichtsgemittelten Molekulargewicht von 100 bis 4000, und
   95 bis 160 Gewichtsteile an Silica,
   basierend auf 100 Gewichtsteilen an einem Dien-Kautschuk,
   wobei eine Volumenänderungsrate der Kautschukzusammensetzung gemessen gemäß JIS K 6258 nach dem Eintauchen in Toluol bei 40°C für 24 Stunden 220 bis 270% ist.

2.   Kautschukzusammensetzung nach Anspruch 1, umfassend zwei oder mehr Arten an Silankupplungsmitteln mit unterschiedlichen Schwefelgehalten.

3.   Kautschukzusammensetzung nach Anspruch 1 oder 2, umfassend ein Silankupplungsmittel mit einer Thioestergruppe.

4.   Reifen mit einem Reifenelement zusammengesetzt aus der Kautschukzusammensetzung nach einem der Ansprüche 1 bis 3.

## Revendications

1.   Composition de caoutchouc comprenant :

   5 à 20 parties en masse d'une résine terpénique ayant une masse moléculaire moyenne en masse de 500 à 4 000,

5 à 30 parties en masse d'un caoutchouc liquide et/ou d'une résine liquide ayant une masse moléculaire moyenne en masse de 100 à 4 000, et
95 à 160 parties en masse de silice,
pour 100 parties en masse d'un caoutchouc de diène,
dans laquelle le taux de changement de volume de la composition de caoutchouc, mesuré conformément à la norme JIS K 6258 après immersion du toluène à 40°C pendant 24 heures, est de 220 à 270 %.

2. Composition de caoutchouc selon la revendication 1, comprenant deux ou plus de deux types d'agents de couplage au silane ayant des teneurs en soufre différentes.

3. Composition de caoutchouc selon la revendication 1 ou 2, comprenant un agent de couplage au silane ayant un groupe thioester.

4. Pneu ayant un élément de pneu composé de la composition de caoutchouc de l'une quelconque des revendications 1 à 3.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013053296 A
- EP 3064543 A1
- FR 5010